# EUROPEAN PATENT SPECIFICATION

(11) **EP 1 078 037 B1**
(45) Date of publication and mention of the grant of the patent: **06.11.2002**
(21) Application number: 99922321.7
(22) Date of filing: 14.05.1999
(51) Int. Cl.: C12H 1/18

(54) **Alcoholic beverage**
Alkoholisches Getränk
Boisson alcoholique

(30) Priority: 15.05.1998 GB 9810310
(43) Date of publication of application: 28.02.2001
(73) Proprietor: Coors Worldwide, Inc.,, Golden, Colorado 80401 (US)
(72) Inventor: SCULLION, Simon Daniel, Burton-on-Trent, Staffordshire DE13 3DA (GB)
(74) Representative: Lawrence, John
(86) International application number: GB9901546
(87) International publication number: WO99060091

(56) References cited:
- EP-A- 0 268 097
- EP-A- 0 683 224
- US-A- 3 826 829
- DATABASE WPI Section Ch, Derwent Publications Ltd., London, GB; Class D13, AN 1971-19784S XP002119404 & JP 46 010033 B (MORINAGA MILK INDS CO LTD)

## Description

This invention relates to an alcoholic beverage, to a method of serving said beverage, and to providing a visual display in an alcoholic beverage.

It is known from US 3826829 to produce a beverage that, while being chilled in a container, such as a can, will partially freeze to form a slush. This document therefore discloses all of the features in the precharacterising portion of claim 1. It is also known from EP 0 268 097 to produce an alchoholic beverage which when cooled forms a soft ice which can be spooned into a glass. JP B 46 010 033 discloses a carbonated milk-based drink that forms fine ice at the time of breaking of its super cooled state, by stimulation of the dissolved CO₂ on uncovering the container into which the drink has been sealed in the super cooled state.

According to a first aspect of the invention, an alcoholic beverage comprises a water content and a dissolved gas content, which prior to being drunk has been stored in a sealed container, cooled to a temperature below the freezing point of water at atmospheric pressure, wherein the beverage has been delivered in said container, which has been opened, to be drunk exposed to ambient atmospheric pressure, such that in said container aforesaid gas bubbles out of the beverage and at least a portion of said water content becomes ice.

According to a second aspect of the invention an alcoholic beverage comprises a water content and a dissolved gas content, the beverage being stored in a sealed container and cooled by chilling means to a temperature below the freezing point of the water at ambient atmospheric pressure, wherein the beverage is arranged such that when the container is opened to expose the beverage to said atmospheric pressure, aforesaid dissolved gas will bubble out of the beverage and at least a portion of said water content will become ice.

If desired the container may be shaped to promote formation of said ice. The container can have an internal surface arranged to provide nucleation sites to promote formation of said ice. For example, at least a portion of the internal surface can be roughened. The surface portion can be roughened by etching, for example by laser etching, or by adhering granular material, for example glass particles to the surface portion.

If desired, the container can have at least a wall portion arranged to change colour automatically with variation in temperature. Such a wall portion may comprise thermo-chromic material.

Preferably the container has a wall portion of sufficient transparency to allow the beverage and/or ice inside the container to be seen.

The container may be a bottle and/or may be of glass. Alternatively, the container may be a can.

The beverage may be a lager, a beer, a porter, a stout, a cider, or a flavoured alcoholic beverage or alco-pop.

Desirably, the gas is a non-oxidising gas. This can avoid or at least slow deterioration of the beverage. The gas preferably comprises carbon dioxide and/or nitrogen. By cooling the beverage and forming ice therein, this appears to, initially at least, reduce the rate of release of dissolved gas from the beverage, for example lager, and appears to improve the drinking sensation, taste, flavour or bite. We believe that this is a combination of the low drinking temperature (maintained by the ice) and the greater amount of retained gas in the beverage.

The presence of the ice can provide an interesting and attractive feature which can be particularly fascinating as the ice may expand at a noticeable rate through the beverage after the container is opened. To add to the interest, the ice may include therein one or more streaks or regions of one or more colours which contrast(s) with the colour of the ice and/or beverage.

The aforesaid ice may be, or may have, the character of slush.

According to a third aspect of the invention a method of serving an alcoholic beverage which comprises a water content and a dissolved gas content, said method comprising providing said beverage in a sealed container, cooling the beverage in the container to a temperature below the freezing point of the water at ambient atmospheric pressure, ceasing to cool the beverage, and opening the container to expose the beverage to the ambient atmospheric pressure, whereby aforesaid gas bubbles out of the exposed beverage and at least a portion of said water becomes ice.

According to a fourth aspect of the invention a method of providing a visual display or effect within a container having at least a portion of wall of some transparency, said method comprising introducing into the container an alcoholic beverage comprising a water content and a dissolved gas content, sealing the container, cooling the beverage in the container to a temperature below the freezing point of the water at ambient atmospheric pressure, and opening the container to expose the beverage to the ambient atmospheric pressure, so that there develops in the beverage a visual
display or effect comprising aforesaid gas bubbling out of the beverage and formation of ice due to at least a portion of said water becoming ice.

Formation of the ice can develop subsequent to opening the container so as to increase the amount and extent of the ice from substantially an upper level of the beverage downwards through the beverage.

The container may be a bottle. If desired, the container may be of glass, or the container may be a can. Preferably the container has a wall portion of some transparency. If desired, the container may have at least a wall portion which changes colour with variation in temperature. For example, the wall portion may comprise thermo-chromic material.

If desired, the container may have a shape or formation which encourages the formation of the ice. To that end, the container may have one or more internal formations to encourage the ice formation. For example, at least a portion of an internal wall of the container may have a roughened texture. The container may be adapted to encourage formation of further ice in the beverage below an upper layer of forming ice, said further ice rising to join the upper layer.

To encourage formation of the ice, an implement can be inserted into the beverage in the open container to encourage formation of the ice. The implement can disturb the beverage so as to cause release of gas bubbles creating nucleation sites for the ice. The implement may be a swizzle-stick, or it may be an elongate thermometer, which may also take the temperature of the beverage to see if it has risen to a safe temperature (for example to about -4.0°C) for the beverage to be drunk.

Colouring material or dye may be provided to form at least one coloured steak or region in the beverage and/or ice, the colour of the material or dye being in contrast to that of the ice and/or beverage so as to be visible.

An aforesaid implement may be used to add the colouring material or dye to the beverage and/or ice. Alternatively, the colouring material or dye may be automatically released in consequence of the container being opened. For example, the act of opening the container may automatically rupture or otherwise open a receptacle containing the colouring material or dye in the container to release that material or dye, or a reduction in pressure within the container consequential to it being opened may cause the rupture or otherwise cause the receptacle to open.

The sealed container may be placed in a tank of cooling liquid to cool the beverage. If desired, the beverage may be cooled to substantially -8.0°C. After the container is opened the beverage may be raised to a temperature of at least -4.0°C.

Preferably the gas is a non-oxidising gas, for example the gas may comprise carbon dioxide and/or nitrogen.

Appropriate alcoholic beverages comprise lager, beer, porter, stout, cider or flavoured alcoholic beverages or alco-pops.

The invention will now be further described, by way of example, with reference to the accompanying drawings, in which:-
**Figure 1** shows a diagrammatic section of a sealed container containing a beverage according to a first, second or third aspect of the invention wherein the beverage is being cooled in readiness for use in performing the method according to the fourth or fifth aspect of the invention, different stages in the method being represented in **Figures 2 to 5**;
**Figures 6 to 8** respectively show diagrammatic sections illustrating modifications of the method according to the fourth or fifth aspect of the invention; and
**Figure 9** is a diagrammatic perspective view of another container containing a beverage according to the first, second or third aspect of the invention for performing the method according to the fourth or fifth aspect.

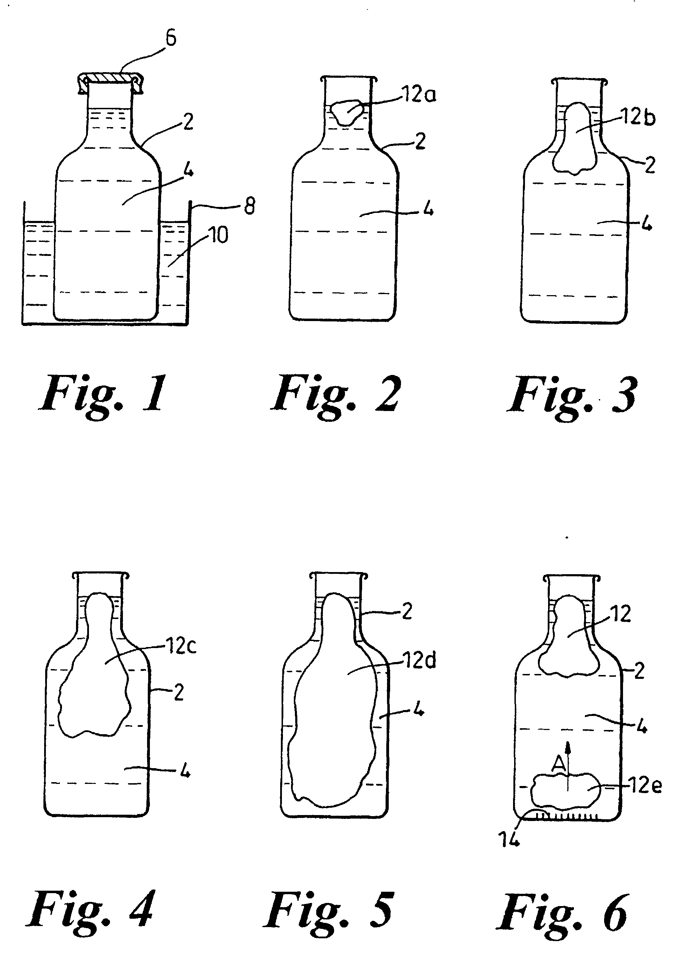

In Figure 1, a container in the form of a bottle 2 formed of a material, for example a glass, of sufficient transparency for the content of the bottle to be seen from outside. The bottle contains an alcoholic beverage 4 comprising a water content and a dissolved gas content. This gas may be any suitable non-oxidising gas, for example carbon dioxide and/or nitrogen. A suitable closure 6 closes the bottle 2 in a fluid-tight manner, in this instance the closure being of the known crimped-cap or crown-cork type. The amount of gas dissolved in the beverage 4 may be within the usual known range for beverages and the pressure within the sealed bottle may also be within the usual known range for gasified drinks. In Figure 1, the bottle of beverage is being cooled, for example to substantially -8.0°C, in bath 8 of cooling liquid 10 which may be a mixture of water and ethylene glycol cooled by any suitable known manner.

When the bottle 2 is removed from cooling and the closure 6 is removed to expose the beverage to ambient atmospheric pressure and ambient or room temperature, the beverage temperature starts to increase. Almost immediately, a slug of ice 12a forms in the neck of the bottle 2 at the upper level of the beverage, the ice being caused (we believe) as a result of nucleation sites resulting from the forming of bubbles of the dissolved gas. The ice is in the nature of slush and is formed from the water already forming the beverage. The slug of ice grows as indicated at 12b in Figure 3 and 12c in Figure 4 until it may substantially occupy the bottle 2 suggested at 12d in Figure 5. The growth of ice can be accomplished in a minute or two, is fascinating to watch and can give rise to interesting visual effects based on the growth of the ice and the bubbling off of the gas. In the case of a bottle of about 300ml capacity containing a flavoured alcoholic beverage or alco-pop, for example HOOPER'S HOOCH™ the development of the ice from the stage in Figure 2 to that in Figure 5 can take about one minute and forty-five seconds.

Not only does the formation of the ice give rise to interesting visual effects, but the existence of the ice helps to keep the drink cool longer. Also, since the ice is formed from the water in the beverage, the beverage is not diluted by the ice. In fact, for an alcoholic beverage, the overall amount of alcohol remains the same in the container when the ice forms, but since water is being used for the ice the alcoholic strength of the remaining liquid beverage increases until the ice melts.

The container may be shaped or formed to encourage formation of the ice. In Figure 6 a region 14 (having a rough surface) is provided to encourage formation of nucleation sites to promote formation of a further ice slug 12e which rises as indicated by arrow A to enlarge the ice slug 12 developing from the top of the container.

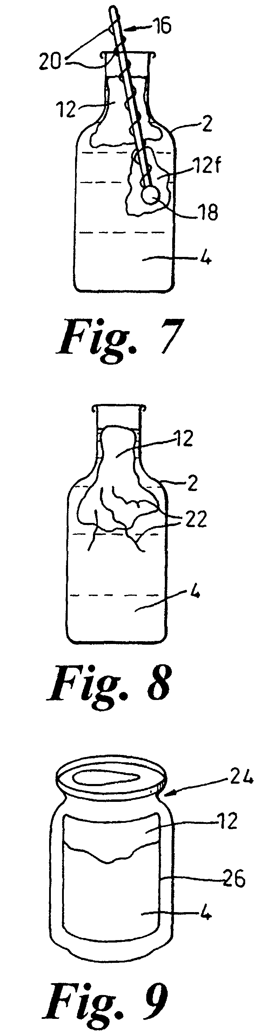

In Figure 7, formation of further ice 12f in the body of the beverage 4 is encouraged by the insertion therein of an elongate implement or rod 16 represented in Figure 7 by a swizzle-stick having formations 18 and 20 at its lower end and shank respectively which further encourage development of nucleation sites. In another instance, the rod 16 may be a thermometer body which can also be used to take the temperature of the drink to see if it has risen sufficiently high, for example to about -4.0°C, for it be safe to drink. The implement can be used to push the ice around.

In Figure 8, coloured regions or streaks 22 are shown in the ice 12 and beverage 4. These coloured formations are formed by the release of non-toxic, edible, colouring materials or dyes into the beverage 4. The colouring material or dye, which stands out visually from the ice and beverage, may be injected into the beverage, or may be introduced into the beverage by or on the aforesaid implement, or means may be provided to automatically release the colouring material or dye when the closure 6 (Figure 1) is removed.

In Figure 9, an opened drinks can 24 is shown having a transparent wall panel or window 26 through which the formation of ice slug 12. in the beverage 4 can be observed and its changing nature visually appreciated.

The containers 2,24 can be formed of, or have external surface areas formed of, material (for example thermo-chromic material), which automatically changes colour with temperature change. Apart from this being a further interesting visual effect, the attainment of one particular colour may signal that the container is cooled sufficiently whilst the attainment of another particular colour may signify that the beverage is at a suitable temperature for drinking.

Whilst any kind of alcoholic beverage having a water and dissolved gas content may be used, we believe that lager and alcoholic flavoured beverages or alco-pops demonstrate the nature of the invention well.

## Claims

1. An alcoholic beverage (4) comprising a water content and a dissolved gas content, which prior to being drunk has been stored in a sealed container, and cooled to a temperature below the freezing point of water at atmospheric pressure, **characterised in that** the beverage has been delivered in said container, which has been opened, to be drunk exposed to ambient atmospheric pressure, such that in said container aforesaid gas bubbles out of the beverage and at least a portion of said water content becomes ice (12).

2. An alcoholic beverage (4) comprising a water content and a dissolved gas content, the beverage being stored in a sealed container and cooled by chilling means to a temperature below the freezing point of the water at ambient atmospheric pressure, **characterised in that** the beverage is arranged such that when the container is opened to expose the beverage to said atmospheric pressure, aforesaid dissolved gas will bubble out of the beverage and at least a portion of said water content will become ice (12).

3. A bottle (2) of alcoholic lager (4) comprising a sealed said bottle containing said lager, wherein the lager comprises a water content and a dissolved gas content, the bottle of lager being cooled to a temperature below the freezing point of water at atmospheric pressure, **characterised in that** when the bottle is opened to expose the lager to said atmospheric pressure, aforesaid dissolved gas is to bubble out of the lager and at least a portion of said water content is to become ice (12).

4. A method of serving an alcoholic beverage (4) which comprises a water content and a dissolved gas content, said method comprising providing said beverage in a sealed container (2; 24), and cooling the beverage in the container to a temperature below the freezing point of the water at ambient atmospheric pressure, **characterised in that** it further comprises ceasing to cool the beverage, and opening the container to expose the beverage to the ambient atmospheric pressure, whereby aforesaid gas bubbles out of the exposed beverage and at least a portion of said water becomes ice (12).

5. A method of providing a visual display or effect within a container (2; 24) having at least a portion (26) of wall of some transparency, said method being **characterised in that** it comprises introducing into the container an alcoholic beverage (4) having a water content and a dissolved gas content, sealing the container, cooling the beverage in the container to a temperature below the freezing point of the water at ambient atmospheric pressure, and opening the container to expose the beverage to the ambient atmospheric pressure so that there develops in the beverage a visual display or effect comprising aforesaid gas bubbling out of the beverage and formation of ice (12) due to at least a portion of said water becoming ice.

6. A method as claimed in Claim 4 or Claim 5, **characterised in that** the formation of ice develops subsequent to opening of the container (2; 24) so as to increase the amount and extent of the ice (12a, 12b, 12c, 12d) from substantially an upper level of the beverage (4) downwards through the beverage.

7. A beverage as claimed in Claim 1 or Claim 2, or a method as claimed in any one of Claims 4 to 6, **characterised in that** the container is a bottle (2) or a can (24).

8. A beverage as claimed in any one of Claims 1, 2 or 7, or a method as claimed in any one of Claims 4 to 6, **characterised in that** said container (24) has a wall portion (26) of sufficient transparency to allow the beverage and/or ice inside the container to be seen.

9. A beverage as claimed in any one of Claims 1, 2, 7 or 8, or a method as claimed in any one of Claims 4 to 8, **characterised in that** the container (2) has one or more internal formations (14) to encourage the forming of the ice (12e).

10. A method as claimed in any one of Claims 4 to 6, in which an implement (16) is inserted into the beverage (4) in the open container (2; 24) to encourage formation of said ice (12).

11. A beverage or a method as claimed in any one preceding claim, **characterised in that** beverage (4) is a lager, a beer, a porter, a stout, a cider, or a flavoured alcoholic beverage or alco-pop.

12. A beverage or a method as claimed in any one preceding claim, **characterised in that** the beverage (4) in the sealed container or bottle (2; 24) is cooled to substantially -8°C.

13. A beverage or a method as claimed in any one preceding claim, **characterised in that** the beverage (4) in the opened container or bottle (2: 24) is raised to a temperature of at least -4°C after cooling ceases.

14. A beverage or a method as claimed in any one preceding claim, **characterised in that** said ice (12) comprises slush.

## Patentansprüche

1. Alkoholisches Getränk (4) umfassend einen Wassergehalt und einen gelösten Gasgehalt, das bevor getrunken zu werden, in einem abgedichteten Gefäß gelagert und auf eine Temperatur unterhalb des Gefrierpunktes von Wasser bei atmosphärischem Druck gekühlt worden ist, **dadurch gekennzeichnet, dass** das Getränk in dem Gefäß geliefert wurde, welches geöffnet wurde, zum Trinken dem atmosphärischen Druck ausgesetzt wurde, so dass in dem Gefäß obengenanntes Gas aus dem Getränk heraussprudelt und zumindest ein Teil des Wassergehaltes zu Eis (12) wird.

2. Alkoholisches Getränk (4) umfassend einen Wassergehalt und einen gelösten Gasgehalt, das Getränk wurde in einem abgedichteten Gefäß gelagert und durch Kühlmittel auf eine Temperatur unterhalb des Gefrierpunktes von Wasser bei atmosphärischem Druck gekühlt, **dadurch gekennzeichnet, dass** das Getränk so arrangiert ist, dass, wenn das Gefäß geöffnet wird, um das Getränk dem atmosphärischen Druck auszusetzen, obengenanntes gelöstes Gas aus dem Getränk heraussprudeln wird und zumindest ein Teil des Wassergehaltes zu Eis (12) wird.

3. Flasche (2) mit alkoholischem Lager-Bier (4), umfassend eine solche abgedichtete Flasche, die das Lager-Bier enthält, worin das Lager-Bier einen Wassergehalt und einen gelösten Gasgehalt umfasst, die Flasche Lager-Bier wurde auf eine Temperatur unterhalb des Gefrierpunktes von Wasser bei atmosphärischem Druck gekühlt, **dadurch gekennzeichnet, dass**, wenn die Flasche geöffnet wird, um das Lager-Bier dem atmosphärischen Druck auszusetzen, obengenanntes gelöstes Gas aus dem Lager-Bier heraussprudelt und zumindest ein Teil des Wassergehaltes zu Eis (12) wird.

4. Verfahren zum Servieren eines alkoholisches Getränk (4), welches einen Wassergehalt und einen gelösten Gasgehalt umfasst, welches Verfahren umfasst die Bereitstellung des Getränkes in einem abgedichteten Gefäß (2; 24), und das Kühlen des Getränkes in dem Gefäß auf eine Temperatur unterhalb des Gefrierpunktes von Wasser bei atmosphärischem Druck, **dadurch gekennzeichnet, dass** es weiterhin umfasst das Beenden der Kühlung des Getränkes, das Öffnen des Gefäßes, um das Getränk dem atmosphärischen Druck auszusetzen, wobei obengenanntes Gas aus dem dem atmosphärischen Druck ausgesetzen Getränk heraussprudelt und zumindest ein Teil des Wassers zu Eis (12) wird.

5. Verfahren zur Vorführung einer optischen Anzeige oder eines Effekt innerhalb eines einen Wandteil (26) mit einiger Durchsichtigkeit habenden Gefäßes (2; 24), welches Verfahren **dadurch gekennzeichnet ist, dass** es umfasst Einfüllen eines alkoholischen Getränkes (4) in das Gefäß, das einen Wassergehalt und einen gelösten Gasgehalt hat, Abdichten des Gefäßes, Kühlen des Getränkes in dem Gefäß auf eine Temperatur unterhalb des Gefrierpunktes von Wasser bei atmosphärischem Druck, und Öffnen des Gefäßes, um das Getränk dem atmosphärischen Druck auszusetzen, so dass sich in dem Getränk eine optische Anzeige oder ein Effekt bildet, umfassend das Heraussprudeln des obengenanntes Gases aus dem Getränk und die Bildung von Eis (12) aufgrund dessen, dass wenigstens ein Teil des Wassers zu Eis wird.

6. Verfahren nach Anspruch 4 oder Anspruch 5, gekenzeichnet dadurch, dass die Bildung von Eis nachfolgend zum Öffnen des Gefäßes (2; 24) entsteht, um die Menge und Ausdehnung des Eises (12a, 12b, 12c, 12d) von im wesentlichen dem oberen Füllstand des Getränkes (4) nach unten durch das Getränk hindurch zu vergrößern.

7. Getränk nach Anspruch 1 oder 2, oder Verfahren nach einem der Ansprüche 4 bis 6, **dadurch gekennzeichnet, dass** das Gefäß eine Flasche (22) oder eine Dose (24) ist.

8. Getränk nach einem der Ansprüche 1, 2 oder 7, oder Verfahren nach einem der Ansprüche 4 bis 6, **dadurch gekennzeichnet, dass** das Gefäß (24) ein Wandteil (26) hat mit hinreichender Durchsichtigkeit, um zu ermöglichen, dass das Getränk und/oder das Eis innerhalb des Gefäßes zu sehen ist.

9. Getränk nach einem der Ansprüche 1, 2, 7 oder 8, oder Verfahren nach einem der Ansprüche 4 bis 8, **dadurch gekennzeichnet, dass** das Gefäß (2) ein oder mehrere innere Formationen (14) hat, um die Bildung von Eis (12e) anzuregen.

10. Verfahren, nach einem der Ansprüche 4 bis 6, in welchem ein Hilfsmittel (16) in das Getränk (4) des offenen Gefäßes hineingeführt wird, um die Bildung von Eis (12) anzuregen.

11. Getränk oder Verfahren nach einem der vorhergehenden Ansprüche, **dadurch gekennzeichnet, dass** das Getränk (4) ein Lager-Bier, ein Bier, ein Porter-Bier, ein Stout-Bier, ein Apfelwein, ein aromatisiertes alkoholisches Getränk oder eine alkoholhaltige Limonade ist.

12. Getränk oder Verfahren nach einem der vorhergehenden Ansprüche, **dadurch gekennzeichnet, dass** das Getränk (4) im abgedichteten Gefäß oder Flasche (2; 224) im wesentlichen auf - 8 ° C gekühlt wird.

13. Getränk oder Verfahren nach einem der vorhergehenden Ansprüche, **dadurch gekennzeichnet, dass** das Getränk (4) in dem geöffnetem Gefäß oder der Flasche (2; 24) auf eine Temperatur von wenigstens - 4 ° C nach Beendigung des Kühlvorgangs angehoben wird.

14. Getränk oder Verfahren nach einem der vorhergehenden Ansprüche, **dadurch gekennzeichnet, dass** das Eis (12) Matsch umfasst.

## Revendications

1. Boisson alcoolisée (4) comprenant une teneur en eau et une teneur en gaz dissous, qui, avant d'être bue, a été stockée dans un récipient étanche, et refroidi à une température inférieure au point de congélation de l'eau à pression atmosphérique, **caractérisée en ce que** la boisson a été délivrée dans ledit récipient, quand lequel a été ouvert, pour être bu à pression atmosphérique ambiante, de sorte que dans ledit récipient le gaz précité se dégage hors de la boisson et au moins une partie de ladite teneur en eau devient de la glace (12).

2. Boisson alcoolisée (4) comprenant une teneur en eau et une teneur en gaz dissous, la boisson étant stockée dans un récipient étanche et refroidie par des moyens de réfrigération à une température inférieure au point de congélation de l'eau à pression atmosphérique ambiante, **caractérisée en ce que** la boisson est disposée de sorte que, lorsque le récipient sera ouvert pour exposer la boisson à ladite pression atmosphérique, le gaz dissous précité se dégagera hors de la boisson et au moins une partie de ladite teneur en eau deviendra de la glace (12).

3. Bouteille (2) de lager alcoolisée (4) comprenant ladite bouteille étanche contenant ladite lager, dans laquelle la lager comprend une teneur en eau et une teneur en gaz dissous, la bouteille de lager étant refroidie à une température inférieure au point de congélation de l'eau à pression atmosphérique, **caractérisée en ce que**, lorsque la bouteille est ouverte pour exposer la lager à ladite pression atmosphérique, le gaz dissous précité se dégage hors de la lager et au moins une partie de ladite teneur en eau devient de la glace (12).

4. Procédé pour servir une boisson alcoolisée (4) qui comprend une teneur en eau et une teneur en gaz dissous, ledit procédé consistant à fournir ladite boisson dans un récipient étanche (2 ; 24), et à refroidir la boisson dans le récipient à une température inférieure au point de congélation de l'eau à pression atmosphérique ambiante, **caractérisé en ce qu'**il consiste de plus à arrêter de refroidir la boisson, et à ouvrir le récipient pour exposer la boisson à la pression atmosphérique ambiante, ainsi le gaz précité se dégage hors de la boisson exposée et au moins une partie de ladite eau devient de la glace (12).

5. Procédé pour fournir une indication ou un effet visuel à l'intérieur d'un récipient (2 ; 24) ayant au moins une partie (26) de la paroi d'une certaine transparence, ledit procédé étant **caractérisé en ce qu'**il consiste à introduire dans le récipient une boisson alcoolisée (4) ayant une teneur en eau et une teneur en gaz dissous, à rendre le récipient étanche, à refroidir la boisson dans le récipient à une température inférieure au point de congélation de l'eau à pression atmosphérique ambiante, et à ouvrir le récipient pour exposer la boisson à la pression atmosphérique ambiante de sorte qu'il se développe dans la boisson une indication ou un effet visuel comprenant le gaz précité se dégageant hors de la boisson et la formation de glace (12) du au fait qu'au moins une partie de ladite eau devient de la glace.

6. Procédé selon la revendication 4 ou 5, **caractérisé en ce que** la formation de glace se développe ultérieurement à l'ouverture du récipient (2 ; 24) de façon à augmenter la quantité et l'étendue de la glace (12a, 12b, 12c, 12d) sensiblement à partir d'un niveau supérieur de la boisson (4) vers le bas à travers la boisson.

7. Boisson selon la revendication 1 ou 2, ou procédé selon l'une quelconque des revendications 4 à 6, **caractérisée en ce que** le récipient est une bouteille (2) ou une cannette (24).

8. Boisson selon l'une quelconque des revendications 1, 2 ou 7, ou procédé selon l'une quelconque des revendications 4 à 6, **caractérisé en ce que** ledit récipient (24) possède une partie de paroi (26) de transparence suffisante pour permettre de voir la boisson et/ou la glace à l'intérieur du récipient.

9. Boisson selon l'une quelconque des revendications 1, 2, 7 ou 8, ou procédé selon l'une quelconque des revendications 4 à 8, **caractérisé en ce que** le récipient (2) possède une ou plusieurs formations internes (14) pour favoriser la formation de la glace (12e).

10. Procédé selon l'une quelconque des revendications 4 à 6, dans lequel un accessoire (16) est inséré dans la boisson (4) dans le récipient ouvert (2 ; 24) pour favoriser la formation de ladite glace (12).

11. Boisson ou procédé selon l'une quelconque des revendications précédentes, **caractérisé en ce que** la boisson (4) est une lager, une bière, un porter, un stout, un cidre ou une boisson alcoolisée aromatisée ou un soda alcoolisé.

12. Boisson ou procédé selon l'une quelconque des revendications précédentes, **caractérisé en ce que** la boisson (4) dans le récipient ou bouteille étanche (2 ; 24) est refroidie à sensiblement -8°C.

13. Boisson ou procédé selon l'une quelconque des revendications précédentes, **caractérisé en ce que** la boisson (4) dans le récipient ou bouteille ouverte (2 ; 24) est élevée à une température d'au moins -4°C après que le refroidissement a cessé.

14. Boisson ou procédé selon l'une quelconque des revendications précédentes, **caractérisé en ce que** ladite glace (12) comprend une barbotine.
